# EUROPÄISCHE PATENTSCHRIFT

(11) **EP 2 905 720 B1**
(45) Veröffentlichungstag und Bekanntmachung des Hinweises auf die Patenterteilung: **27.07.2016**
(21) Anmeldenummer: 14154305.8
(22) Anmeldetag: 07.02.2014
(51) Int. Cl.: G06K 7/10

(54) **Verfahren und RFID-Schreib-Lesegerät zur Selektierung eines RFID-Datenträgers**
Method and RFID write-read device for selecting an RFID data carrier
Procédé et appareil de lecture écriture RFID pour la sélection d'un support de données RFID

(43) Veröffentlichungstag der Anmeldung: 12.08.2015
(73) Patentinhaber: Siemens Aktiengesellschaft, 80333 München (DE)
(72) Erfinder: Horst, Dieter, 90556 Cadolzburg (DE); Weinländer, Markus, 91230 Happurg (DE)

(56) Entgegenhaltungen:
- DE-A1-102011 100 910

## Beschreibung

Die Erfindung betrifft ein Verfahren zur Selektierung eines aus einer Anzahl durch ein RFID-Schreib-Lesegerät erfasster RFID-Datenträger gemäß dem Oberbegriff des Patentanspruchs 1, und ein RFID-Schreib-Lesegerät zur Ausführung des Verfahrens gemäß dem Oberbegriff des Patentanspruchs 14.

Zur Identifizierung von Werkstücken und anderen Gegenständen werden insbesondere in industriellen Automatisierungsanordnungen RFID-Datenträger (auch Transponder oder TAGs genannt) und die zugehörigen RFID-Schreib-Lesegeräte (auch Reader genannt) eingesetzt. Zumeist werden passive RFID-Datenträger eingesetzt, die aus einem vom RFID-Schreib-Lesegerät erzeugten Hochfrequenzfeld mit Energie versorgt werden, und die durch Modulation ("Backscattern") dieses Hochfrequenzfeldes Informationen zu dem RFID-Schreib-Lesegerät übertragen. Das RFID-Schreib-Lesegerät muss also gleichzeitig sowohl senden, als auch das modulierte Signal empfangen, wobei trotz der Tatsache, dass das empfangene Signal aus dem vom RFID-Schreib-Lesegerät emittierten Hochfrequenzsignals basiert, der empfangene Signalanteil als vom RFID-Datenträger emittiert angesehen werden kann.

Insbesondere bei RFID-Systemen, die im UHF-Bereich arbeiten, können zeitgleich mehrere RFID-Datenträger vom RFID-Schreib-Lesegerät erfasst werden. Obwohl dies für viele Anwendungen auch gewünscht ist, beispielsweise zur Erfassung aller Waren in einem Warenkorb, ist in vielen Anwendungen erwünscht, dass nur ein einziger RFID-Datenträger erfasst wird, und zwar regelmäßig der dem RFID-Schreib-Lesegerät nächstliegende. Werden in solchen Anordnungen dennoch mehrere RFID-Datenträger gleichzeitig erfasst, muss nach der Erfassung versucht werden, den nächstliegenden der RFID-Datenträger zu selektieren, also herauszufiltern.

Im Stand der Technik sind zahlreiche Vorgehensweisen bekannt, um eine solche Selektion vorzunehmen. Beispielsweise wird zu allen empfangenen RFID-Datenträgern die Empfangsfeldstärke (RSSI-Received Signal Strength Indication) registriert, wobei davon ausgegangen wird, dass derjenige RFID-Datenträger mit der besten Empfangsfeldstärke auch der nächstliegende ist, so dass dieser selektiert wird. Aufgrund von Reflexionen der Funkwellen, Überreichweiten und anderer Effekte ist es jedoch möglich, dass eben nicht der nächstliegende der RFID-Datenträger auch derjenige ist, der mit der besten Signalstärke empfangen wird. Neben Optimierungen im Funkfeld, beispielsweise durch elektromagnetische Abschirmung benachbarter Bereiche und dergleichen, wird häufig versucht, die fälschlich selektierten RFID-Datenträger, sogenannte "False Positive Reads", durch eine entsprechende Verarbeitungslogik auszufiltern, beispielsweise durch Vergleich der Seriennummern (Transponder-ID) mit Erwartungswerten und dergleichen. Dazu sind jedoch genaue Kenntnis der Erwartungswerte notwendig, so dass nicht in allen Fällen eine nachgeschaltete Verarbeitungslogik in der Lage ist, die zwar technisch korrekt erfassten, aber dennoch mit der tatsächlichen Leseaufgabe derzeit nicht verknüpften Transponder auszufiltern.

Dokument DE 102011100910 offenbart ein Verfahren und System zur Lokalisierung von Lagereinheiten auf Basis von Transpondern, gemäss dem Obergriff der Ansprüche 1 und 14.

Weitere Verfahren zur Selektierung des Transponders bestehen beispielsweise darin, dass die Sendeleistung des RFID-Schreib-Lesegerätes dynamisch angepasst wird, beispielsweise indem die Sendeleistung von einem Minimalwert ausgehend sukzessive erhöht wird, bis genau ein RFID-Datenträger erfasst wird; dieses Verfahren ist auch als "Power Ramping" bekannt. Ein anderes Verfahren besteht darin, eine Vielzahl von aufeinanderfolgenden Erfassungsvorgängen zu starten, wobei dann beispielsweise derjenige RFID-Datenträger selektiert wird, der am häufigsten erfasst wird. Dieses Vorgehen lässt sich gegebenenfalls auch mit dem zuvor beschriebenen "Power Ramping" kombinieren.

Obwohl die zuvor beschriebenen Maßnahmen, die gegebenenfalls auch alle miteinander kombinierbar sind, die Anzahl der falschen Selektierungen (False Positiv Reads) erheblich zu reduzieren vermögen, verbleibt dennoch die Aufgabe, die Sicherheit bei der Selektierung von RFID-Datenträgern weiter zu verbessern.

Es ist eine Kernidee zur Lösung der zuvor beschriebenen Aufgabe, dass eine Anzahl der im Empfangsbereich eines RFID-Schreib-Lesegerätes befindlichen RFID-Datenträger ("Population") durch eine Vielzahl nacheinander durchzuführender Erfassungsvorgänge zu registrieren, wobei jeweils ein Empfangsparameter (beispielsweise die Empfangsfeldstärke o. ä.) erfasst werden soll. Für jeden der erfassten RFID-Datenträger, die gemeinhin anhand ihrer Seriennummer oder anderer Eigenschaften voneinander unterschieden werden können, wird der dabei registrierte Signalverlauf protokolliert, beispielsweise nach Art einer Verlaufskurve (Graph). Nach einer Trainingsphase (Kalibrierung), bei der bekannt ist, welcher der RFID-Datenträger und damit auch welcher der erfassten Graphen der gewünschte und damit zu selektieren ist, wird der zugehörige Graph oder eine daraus bestimmte Kenngröße als Sollwert und somit als Muster (Template) gespeichert. Bei nachfolgenden Erfassungsvorgängen im Produktivbetrieb werden ebenfalls die Signalverläufe der dabei erfassten RFID-Datenträger als Verlaufskurve (Graph) betrachtet, wobei derjenige der RFID-Datenträger erfindungsgemäß selektiert werden soll, dessen Verlaufskurve (Graph) bzw. eine daraus ebenfalls errechnete Kenngröße zu dem Muster (Template) die größte Ähnlichkeit aufweist. Damit ist gewährleistet, dass nicht einzelne Messungen, die aufgrund äußerer Umstände, Störungen oder Zufälligkeiten einen entfernt liegenden RFID-Datenträger ungewünscht als den zu selektierenden erscheinen lassen mögen, zu einem "False Positiv Read" führt.

Die Aufgabe wird insbesondere durch ein Verfahren gemäß dem Patentanspruch 1 und durch ein RFID-Schreib-Lesegerät gemäß Patentanspruch 14 gelöst.

Dabei wird ein Verfahren zu Selektierung eines aus einer Anzahl durch ein RFID-Schreib-Lesegerät erfasster RFID-Datenträger vorgeschlagen, wobei während einer Trainingsphase ein Sollwert für einen Empfangsparameter eines zu selektierenden Muster-RFID-Datenträgers ermittelt wird, und wobei während eines Produktivbetriebes Ist-Werte von Empfangsparametern erfasster RFID-Datenträger mit dem Sollwert zur Selektion eines der erfassten RFID-Datenträger in Bezug gesetzt werden. Dabei wird während der Trainingsphase in einer ersten zeitlichen Folge eine Anzahl Erfassungen zumindest eines Muster-RFID-Datenträgers vorgenommen, wobei zumindest eine Folge von Sollwerten für zumindest einen Empfangsparameter nach Art einer zeitlichen Verlaufskurve ermittelt wird, wobei während des Produktivbetriebs in einer zweiten zeitlichen Folge eine Anzahl Erfassungen der im Empfangsbereich des RFID-Schreib-Lesegerätes befindlichen RFID-Datenträger erfolgt, wobei für jeden der dabei erfassten RFID-Datenträger jeweils eine Folge von Istwerten nach Art einer zeitlichen Verlaufskurve ermittelt wird, und wobei die im Produktivbetrieb ermittelten Folgen von Istwerten mit der zumindest einen Folge von Sollwerten jeweils verglichen werden, und wobei anhand des jeweiligen Grades der Übereinstimmung einer der im Produktivbetrieb erfassten RFID-Datenträger selektiert wird. Durch dieses Verfahren ist eine sichere Selektierung des RFID-Datenträgers auch in solchen Fällen gewährleistet, in denen durch Überreichweiten und andere Effekte nicht gewünschte der RFID-Datenträger zumindest temporär mit einem besseren Empfangsparameter erfasst werden.

Die Aufgabe wird außerdem durch ein RFID-Schreib-Lesegerät zur Selektierung eines aus einer Anzahl erfasster RFID-Datenträger gelöst, wobei das RFID-Schreib-Lesegerät derart ausgestaltet ist, dass während einer Trainingsphase ein Sollwert für einen Empfangsparameter eines zu selektierenden Muster-RFID-Datenträgers ermittelt wird, und wobei während eines Produktivbetriebs Ist-Werte von Empfangsparametern erfasster RFID-Datenträger mit dem Sollwert zur Selektion eines der erfassten RFID-Datenträger in Bezug gesetzt werden. Dabei ist das RFID-Schreib-Lesegerät derart ausgestaltet, dass während der Trainingsphase in einer ersten zeitlichen Folge eine Anzahl Erfassungen zumindest eines Muster-RFID-Datenträgers erfolgt, wobei zumindest eine Folge von Sollwerten für zumindest einen Empfangsparameter, nach Art einer zeitlichen Verlaufskurve ermittelt wird, wobei während des Produktivbetriebs in einer zweiten zeitlichen Folge eine Anzahl Erfassungen der im Empfangsbereich des RFID-Schreib-Lesegerätes befindlichen RFID-Datenträger erfolgt, wobei für jeden der dabei erfassten RFID-Datenträger jeweils eine Folge von Istwerten nach Art einer zeitlichen Verlaufskurve ermittelt wird, und wobei die im Produktivbetrieb ermittelten Folgen von Istwerten mit der zumindest einen Folge von Sollwerten jeweils verglichen werden, wobei anhand des jeweiligen Grades der Übereinstimmung einer der im Produktivbetrieb erfassten RFID-Datenträger selektiert wird. Durch ein solches RFID-Schreib-Lesegerät können die bereits anhand des Verfahrens diskutierten Vorteile realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße RFID-Schreib-Lesegerät. Die mit den abhängigen Patentansprüchen vorgeschlagenen Ausgestaltungen können sowohl einzeln, als auch in freier Kombination miteinander zur Verbesserung des vorgeschlagenen Verfahrens bzw. zur Verbesserung des vorgeschlagenen RFID-Schreib-Lesegerätes angewendet werden.

Als auszuwertender Empfangsparameter kann vorteilhaft ein Feldstärkewert, ein Rauschspannungsabstand oder ein anderes qualitatives Kriterium des durch das RFID-Schreib-Lesegerät jeweils erfassten Hochfrequenzsignals des jeweiligen RFID-Datenträgers verwendet werden. Diese Empfangsparameter liegen in den gebräuchlichen RFID-Schreib-Lesegeräten ohnehin vor, so dass lediglich eine Aufzeichnung dieser Werte erfolgen muss. Als Empfangsparameter kann außerdem auch vorteilhaft der Phasenwinkel zwischen gesendetem und empfangenem Signal verwendet werden, was insbesondere zur Ausfilterung von Reflexionen vorteilhaft ist. Selbstverständlich können auch für ein- und denselben RFID-Datenträger mehrere verschiedene Empfangsparameter erfasst werden, wodurch sich mehrere Folgen von Sollwerten bzw. Istwerten ergeben, wobei aus dem jeweiligen Vergleichen der sich ergebenden Kurven ein gegebenenfalls gewichteter Gesamtwert errechnet werden kann.

Bereits in einem stationären Zustand, bei dem weder der Abstand zwischen dem RFID-Schreib-Lesegerät und den jeweiligen RFID-Datenträgern noch die Sendeleistung oder andere Sendeparameter des RFID-Schreib-Lesegerätes variiert werden, sind die bei der Folge von Erfassungsvorgängen gemessenen Werte für den Empfangsparameter keineswegs konstant, so dass sich dabei bereits eine Verlaufskurve ermitteln lässt. Jedoch lassen sich wesentlich bessere Ergebnisse erzielen, wenn während der zeitlichen Folge eine Variation jeweils der Sendeleistung des RFID-Schreib-Lesegerätes erfolgt, beispielsweise nach Art einer aufsteigenden Rampe ("Power Ramping") oder in einer alternativen Ausführungsform beispielsweise in nichtlinearer Weise, beispielsweise sinusförmig oder exponentiell. Alternativ oder zusätzlich kann als eine Variation auch jeweils der Abstand zwischen dem jeweiligen RFID-Datenträger und dem RFID-Schreib-Lesegerät variiert werden. Diese Ausführungsform bietet sich insbesondere in solchen Fällen an, in denen die RFID-Datenträger bzw. die damit gekennzeichneten Objekte ohnehin bewegt werden, beispielsweise mittels eines Förderbandes oder dergleichen. In allen Fällen gilt jedoch, dass vorteilhaft die Variation während der Trainingsphase und die Variation während des Produktivbetriebs in zueinander analoger Weise erfolgen soll. Anderenfalls bietet es sich jedoch auch an, zumindest eine der beiden Verlaufskurven bezüglich der Zeitachse entsprechend zu skalieren, um die Vergleichbarkeit der erfassten kurvenförmigen Verläufe zu gewährleisten. Ein weiteres Mittel zur Variation ist möglich, sofern das RFID-Schreib-Lesegerät über eine Anzahl umschaltbarer Antennen und/oder umschaltbarer Antennen-Polarisationen (z.B. horizontal, vertikal oder zirkular) verfügt. Dann kann alternativ oder zusätzlich zu den zuvor beschriebenen Maßnahmen während der Aufzeichnung der zeitlichen Folge eine Umschaltung der Antennen bzw. Antennen-Polarisation erfolgen, gegebenenfalls auch mehrfach während eines Erfassungszyklus'. Weiterhin bietet sich auch eine Variation zwischen mehreren verfügbaren Funkkanälen des RFID-Schreib-Lesegerätes an, was insbesondere dann vorteilhaft ist, wenn diese Funkkanäle in unterschiedlichen Frequenzbändern liegen. Dadurch können beispielsweise auch solche der RFID-Datenträger erfasst werden, die sich bei einer bestimmten Frequenz sich wegen einer reflektionsbedingten Interferenz an einer Stelle befinden, an der keine Erfassung möglich ist.

Vorteilhaft werden während der Trainingsphase mehrere Folgen von Sollwerten erfasst, wobei zumindest eine dieser Folgen von einem Benutzer als die zu verwendende Folge von Sollwerten ausgewählt wird. Dazu kann es beispielsweise genügen, eine Seriennummer oder ein anderes Identifizierungsmerkmal von einem der dabei erfassten RFID-Datenträger anzugeben. Alternativ kann die Unterscheidung auch automatisch erfolgen, beispielsweise anhand einer Information, die aus einem Datenfeld des RFID-Datenträgers ausgelesen wird, oder anhand einer Seriennummer. So kann beispielsweise anhand eines "Prefixes" oder "Nummernbandes" der Identifizierungsnummer zwischen funktionalen Gruppen von RFID-Datenträgern unterschieden werden, wobei dann derjenige RFID-Datenträger als Muster verwendet wird, der zu der für die gegenständliche Anwendung gehörenden Gruppe gehört. Somit kann dann während der Trainingsphase schon zwischen dem "Muster-Transponder" und etwaigen gleichzeitig empfangenen, nicht-gewünschten Transpondern unterschieden werden. Die vorgeschlagene Maßnahme kann aber auch dazu dienen, bei einem wiederholten Erfassen des Muster-RFID-Transponders eine besonders geeignete der sich ergebenden Verlaufskurven auszuwählen. Weiterhin ist es möglich, aus mehreren Verlaufskurven desselben Muster-RFID-Transponders automatisch eine besonders geeignete Sollwertkurve ermitteln bzw. errechnen zu lassen. Dies kann zum einen durch eine Mittelwertbildung oder durch eine andere Zusammenführung der ermittelten Sollwertkurven geschehen, zum anderen kann das RFID-Schreib-Lesegerät oder eine andere Computereinheit auch diejenige Sollwertkurve als "Template" selektieren, die die beste Übereinstimmung zu allen anderen erfassten Sollwertkurven (Folge von Sollwerten des Muster-RFID-Datenträgers) aufweist. Außerdem kann es von Vorteil sein, bei der Erfassung von mehreren Sollwertkurven auch mehrere verschiedene Muster-RFID-Transponder zu verwenden, insbesondere dann, wenn in dem Anwendungsszenario verschiedene Typen von RFID-Datenträgern zum Einsatz kommen sollen. Dann werden im Produktivbetrieb gegebenenfalls mehrere Templates eingesetzt.

Für den Vergleich von Folgen von Sollwerten und von Istwerten kann aus jeder der Kurven zunächst einmal eine Kenngröße oder ein Kenngrößen-Datensatz erstellt werden. Dann sind zum Vergleich der Kurven nur noch die Kenngrößen bzw. die Kenngrößen-Datensätze zu vergleichen. Es kommt dabei natürlich nicht auf eine absolute Übereinstimmung an, sondern auf die bestmögliche oder höchste Übereinstimmung. Bei der Verwendung von Kenngrößen-Datensätzen müssen dabei nicht zwangsläufig die einzelnen Parameter der jeweiligen Datensätze in gleicher Weise übereinstimmen, sondern es können vielmehr Gewichtungen vorgenommen werden. Auch eine Verarbeitung mittels eines neuronalen Netzwerkes und/oder nach den Regeln der Fuzzy Logic bietet sich dabei an. Besonders geeignete Mittel zur Ermittlung der Kenngrößen sind beispielsweise die Fourier-Transformation bzw., bezogen auf die Tatsache, dass es sich hier um diskrete Wertepaare handelt, die schnelle Fourier-Transformation (FFT). Selbstverständlich können auch andere Verfahren zur Auswertung eines analogen oder digitalen (zeitdiskreten) Signalverlaufs zum Einsatz kommen.

Ein Ausführungsbeispiel des erfindungsgemäßen Verfahrens wird nachfolgend anhand der Zeichnungen erläutert. Es dient gleichzeitig der Erläuterung eines erfindungsgemäßen RFID-Schreib-Lesegerätes.

Dabei zeigen:
- Figur 1: die zeitlichen Verlaufskurven bei der Erfassung von drei RFID-Datenträgern bei einer ersten Messung,
- Figur 2: den zeitlichen Verlauf bei einer zweiten Messung, und
- Figur 3: den zeitlichen Verlauf bei einer dritten Messung.

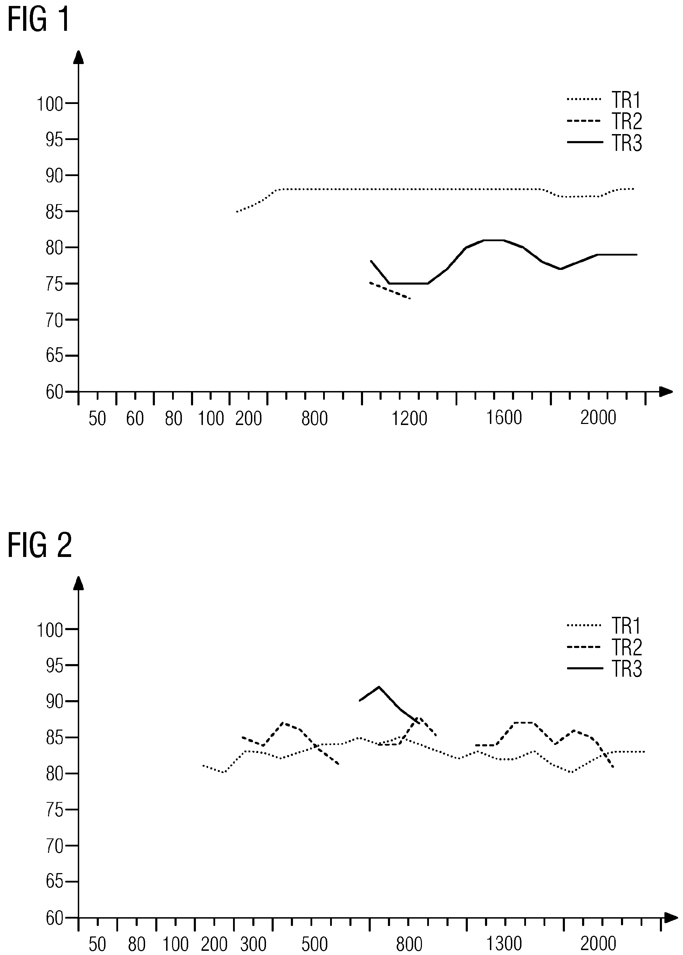

In der Figur 1 sind grafisch in Form einer Verlaufskurve Werte eines Empfangsparameters bei einer Anzahl Erfassungen von drei verschiedenen RFID-Datenträgern TR1, TR2, TR3 dargestellt. Auf der Abszisse der Darstellung ist dabei ein Wert für die Sendeleistung des RFID-Schreib-Lesegerätes dargestellt. Es ist zu sehen, dass jeweils mehrere aufeinanderfolgende Messungen mit konstanter Sendeleistung ausgeführt wurden, mithin die Sendeleistung also einen stufenförmigen Verlauf genommen hat. Die Verlaufskurven für den betrachteten Empfangsparameter der RFID-Datenträger TR1, TR2, TR3 sind in der Darstellung als durchgezogene Linie, gepunktet und gestrichelt dargestellt; tatsächlich macht die Figur 1 keine Aussage darüber, wie viele Erfassungen überhaupt stattgefunden haben. Es kann jedoch angenommen werden, dass für jeden der auf der Abszisse aufgetragenen Werte für die Sendeleistung zumindest ein Erfassungsvorgang stattgefunden hat.

Auf der Ordinate der Darstellung in der Figur 1 ist ein Empfangsparameter abgetragen, hier beispielsweise die Empfangsfeldstärke (Received Signal Strength Indication - RSSI). Die auf der Abszisse und auf der Ordinate eingezeichneten absoluten Werte sind skaliert worden, was bedeutet, dass die tatsächlichen Sendeleistungen und Empfangsfeldstärken bezüglich ihrer Absolutwerte abweichen können; in der Darstellung ist also nur ein qualitativer Verlauf angegeben.

Es sei angenommen, dass es sich bei der Darstellung in der Figur 1 um die Situation während der Trainingsphase handelt, wobei weiter angenommen sei, dass der RFID-Datenträger TR1 der Muster-RFID-Datenträger ist. Die Werte für dessen ausgewerteten Empfangsparameter (hier: RSSI-Wert) liegt während des kompletten betrachteten zeitlichen Verlaufs höher als der entsprechende Empfangsparameter der RFID-Datenträger TR2, TR3. Dies bedeutet, dass die Situation aus der Figur 1 bereits mit den aus dem Stand der Technik bekannten Mitteln zu beherrschen gewesen wäre. Es sei angenommen, dass der hier aufgezeichnete Verlauf des Empfangsparameters des RFID-Datenträgers TR1 als Folge von Sollwerten (Sollwertkurve) beim Produktivbetrieb eingesetzt werden soll.

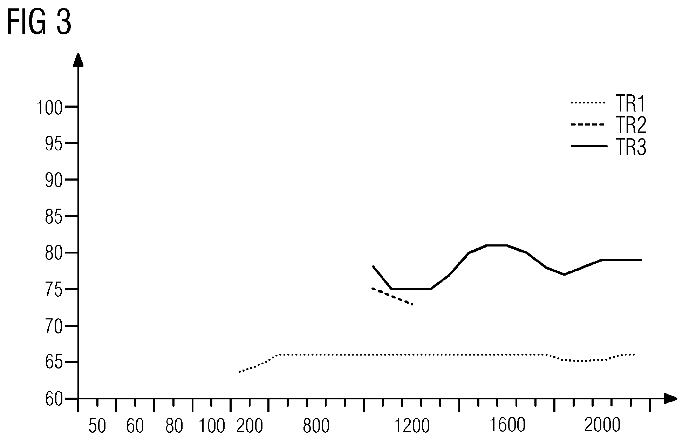

In den Figuren 2 und 3 wird nun dasselbe Szenario betrachtet, wobei in diesen Figuren 2 und 3 die Istwerte für zwei verschiedene Messzyklen (Erfassungszyklen) des Produktivbetriebs eingetragen sind. Die in den Figuren 2 und 3 verzeichneten RFID-Datenträger TR1, TR2, TR3 sind nicht notwendigerweise dieselben, die auch in der Trainingsphase verwendet worden sind.

Es soll zunächst die Situation aus der Figur 2 betrachtet werden. In einer zu der Trainingsphase analogen Weise ist hier jeweils der zeitliche Verlauf eines Empfangsparameters der RFID-Datenträger TR1, TR2, TR3 grafisch dargestellt worden. Im Gegensatz zu der Situation aus der Figur 1, bei der allein durch eine vergleichende Betrachtung des Mittelwertes oder des Maximalwertes des Empfangsparameters der zu selektierende der RFID-Datenträger TR1, TR2, TR3 zu bestimmen gewesen wäre, ist die Situation in der Figur 2 weniger eindeutig.

Eine Betrachtung der (mittleren) Amplitude des Signalverlaufs führt hier also nicht zum Ziel, welches darin besteht, den richtigen" der RFID-Datenträger, nämlich den RFID-Datenträger TR1, automatisch zu selektieren.

In der Figur 1 ist zu sehen, dass diejenige Kurve, welche dem RFID-Datenträger TR 1 zuzuordnen ist, einen vergleichsweise glatten "Verlauf" aufweist, was beispielsweise nach einer Fourier-Transformation das Ergebnis zur Folge hat, dass nur wenige hochfrequente Signalanteile bei diesem Kurvenverlauf resultieren, dagegen jedoch ein sehr hoher konstanter Anteil ("Gleichspannungsanteil"). Dies bedeutet also, dass eine aus der Sollwertkurve des RFID-Datenträgers TR1 resultierende Kenngröße besagen könnte, dass ein hoher Anteil von niedrigen Signalfrequenzen und ein geringer Anteil von hohen Signalfrequenzen als charakteristisch für den zu selektierenden RFID-Datenträger angenommen werden soll. Sobald diese Information auf die drei in der Figur 2 dargestellten Signalverläufe angewendet wird, kann angenommen werden, dass auch hier die Kenngrößen des RFID-Datenträgers TR1 den geringsten Hochfrequenz-Anteil aufweisen, denn die Verlaufskurven der RFID-Datenträger TR2 und TR3 weisen jeweils Sprünge auf, die im Frequenzspektrum zu einem ausgeprägten Hochfrequenz-Anteil führen würden. Hier würde also richtigerweise der RFID-Datenträger TR1 selektiert, obwohl beispielsweise der RFID-Datenträger TR3 die höchsten Absolutwerte beim betrachteten Empfangsparameter zeigt.

Noch eindeutiger ist die Situation, die in der Figur 3 dargestellt ist. Obwohl hier der RFID-Datenträger TR1 über den gesamten gemessenen Verlauf mit der geringsten Empfangsfeldstärke empfangen wird, weist dessen Verlaufskurve die höchste Ähnlichkeit zur Sollwertkurve (siehe Figur 1, RFID-Datenträger TR1) auf. Ein Verfahren, welches sich nur an den absoluten Werten für den ermittelten Empfangsparameter orientiert, beispielsweise anhand einer Mittelwertbildung oder dergleichen, würde hier zum falschen Ergebnis gelangen, dass der RFID-Datenträger TR3 zu selektieren wäre.

Der bei Vergleich der Verlaufskurven ermittelte Übereinstimmungsgrad kann wie beschrieben dazu benutzt werden, um im Falle mehrerer gleichzeitig erfasster RFID-Datenträger denjenigen auszuwählen (zu selektieren), der den höchsten Übereinstimmungsgrad bezüglich seiner im Produktivbetrieb ermittelten Verlaufskurve für den Empfangsparameter aufweist. Zudem kann insbesondere (aber nicht nur) in den Fällen, in denen nur ein RFID-Datenträger im Produktivbetrieb erfasst wird, ein Mindest-Übereinstimmungsgrad zwischen Sollwertkurve und Istwertkurve vorgegeben werden. Damit können Fehlerfassungen aufgrund von Überreichweiten genauso ausgefiltert werden, wie sich auch defekte RFID-Datenträger identifizieren lassen.

Mittels des vorgeschlagenen Verfahrens und mittels des vorgeschlagenen RFID-Schreib-Lesegerätes ist eine Bewertung des dynamischen Verlaufs eines Empfangsparameters, insbesondere des RSSI-Wertes, anstelle der bislang üblichen Auswertung statistischer Werte möglich. Dies bedeutet, dass die Änderung eines Wertes des betrachteten Empfangsparameters über den zeitlichen Verlauf hinweg als wesentliches Charakteristikum für die Selektion eines RFID-Datenträgers herangezogen werden kann. Das Auswählen (Selektieren) bzw. das Verwerfen von RFID-Datenträgern soll dabei erfindungsgemäß anhand eines Mustervergleichs zwischen einer Referenzkurve und einer Istwert-Kurve stattfinden. Die im vorliegenden Ausführungsbeispiel verwendete Fourier-Transformation und die dadurch realisierte Differenzierung von niederfrequenten und hochfrequenten Signalanteilen ist hier nur als ein exemplarisches Beispiel für eine Analyse des dynamischen Verlaufs zu sehen; im Stand der Technik sind eine Vielzahl von Verfahren der Kennwertbildung für den dynamischen Verlauf eines Ereignisses bekannt, die erfindungsgemäß auch in Kombination miteinander eingesetzt werden können, um eine Sollwertkurve mit den Istwertkurven zu vergleichen und ein Maß für die Ähnlichkeit zwischen zwei Kurven jeweils anzugeben.

## Patentansprüche

1. Verfahren zur Selektierung eines aus einer Anzahl durch ein RFID-Schreib-Lesegerät erfasster RFID-Datenträger (TR1, TR2, TR3),
wobei während einer Trainingsphase ein Sollwert für einen Empfangsparameter eines zu selektierenden Muster-RFID-Datenträgers (TR1, TR2, TR3) ermittelt wird,
und wobei während eines Produktivbetriebs Ist-Werte von Empfangsparametern erfasster RFID-Datenträger (TR1, TR2, TR3) mit dem Sollwert zur Selektion eines der erfassten RFID-Datenträger (TR1, TR2, TR3) in Bezug gesetzt werden,
**dadurch gekennzeichnet, dass**
während der Trainingsphase in einer ersten zeitlichen Folge eine Anzahl Erfassungen zumindest eines Muster-RFID-Datenträgers (TR1) erfolgt, wobei zumindest eine Folge von Sollwerten für zumindest einen Empfangsparameter nach Art einer zeitlichen Verlaufskurve ermittelt wird,
dass während des Produktivbetriebs in einer zweiten zeitlichen Folge eine Anzahl Erfassungen der im Empfangsbereich des RFID-Schreib-Lesegerätes (TR1, TR2, TR3) befindlichen RFID-Datenträger erfolgt, wobei für jeden der dabei erfassten RFID-Datenträger (TR1, TR2, TR3) jeweils eine Folge von Istwerten nach Art einer zeitlichen Verlaufskurve ermittelt wird, und
dass die im Produktivbetrieb ermittelten Folgen von Istwerten mit der zumindest einen Folge von Sollwerten jeweils verglichen werden, wobei anhand des jeweiligen Grades der Übereinstimmung einer der im Produktivbetrieb erfassten RFID-Datenträger (TR1, TR2, TR3) selektiert wird.

2. Verfahren nach Patentanspruch 1,
**dadurch gekennzeichnet, dass**
als Empfangsparameter ein Feldstärkewert, ein Rauschspannungsabstand oder ein anderes qualitatives Kriterium des durch das RFID-Schreib-Lesegerät jeweils erfassten Hochfrequenzsignals des jeweiligen RFID-Datenträgers (TR1, TR2, TR3) verwendet wird.

3. Verfahren nach einem der vorhergehenden Patentansprüche,
**dadurch gekennzeichnet, dass**
als Empfangsparameter der Phasenwinkel zwischen gesendetem Signal und empfangenem Signal des durch das RFID-Schreib-Lesegerät jeweils erfassten Hochfrequenzsignals des jeweiligen RFID-Datenträgers (TR1, TR2, TR3) verwendet wird.

4. Verfahren nach einem der vorhergehenden Patentansprüche,
**dadurch gekennzeichnet, dass**
während der zeitlichen Folge als eine Variation jeweils die Sendeleistung des RFID-Schreib-Lesegerätes variiert wird.

5. Verfahren nach einem der vorhergehenden Patentansprüche,
**dadurch gekennzeichnet, dass**
während der zeitlichen Folge als eine Variation jeweils der Abstand zwischen dem jeweiligen RFID-Datenträger (TR1, TR2, TR3) und dem RFID-Schreib-Lesegerät variiert wird.

6. Verfahren nach einem der vorhergehenden Patentansprüche,
**dadurch gekennzeichnet, dass**
während der zeitlichen Folge als eine Variation zwischen mehreren Antennen und / oder Antennen-Polarisationen des RFID-Schreib-Lesegerätes umgeschaltet wird.

7. Verfahren nach einem der vorhergehenden Patentansprüche,
**dadurch gekennzeichnet, dass**
während der zeitlichen Folge als eine Variation zwischen mehreren Funkkanälen des RFID-Schreib-Lesegerät gewechselt wird.

8. Verfahren nach einem der Patentansprüche 4 - 7,
**dadurch gekennzeichnet, dass**
während der Trainingsphase und während des Produktivbetriebs die Variation während der zeitlichen Folge jeweils in analoger Weise durchgeführt wird.

9. Verfahren nach einem der vorhergehenden Patentansprüche,
**dadurch gekennzeichnet, dass**
während der Trainingsphase mehrere Folgen von Sollwerten erfasst werden, wobei zumindest eine dieser Folgen von manuell durch einen Benutzer oder automatisch anhand von Informationen, die aus dem Inhalt eines Datenspeichers des jeweiligen RFID-Datenträgers (TR1, TR2, TR3) gewonnen wurden, als zu verwendende Folge von Sollwerten ausgewählt wird.

10. Verfahren nach Patentanspruch 9,
**dadurch gekennzeichnet, dass**
die mehreren Folgen von Sollwerten aus der Erfassung verschiedener RFID-Datenträger (TR1, TR2, TR3) resultieren.

11. Verfahren nach einem der vorhergehenden Patentansprüche,
**dadurch gekennzeichnet, dass**
bei dem quasi-simultanen Empfang von mehreren RFID-Datenträgern (TR1, TR2, TR3) diese jeweils anhand einer jeweils eindeutigen Kennung oder Identifizierungsnummer voneinander unterschieden werden, wobei den verschiedenen Folgen von Sollwerten und/oder Istwerten diese Kennung oder ein Alias für diese Kennung jeweils zugeordnet wird.

12. Verfahren nach einem der vorhergehenden Patentansprüche,
**dadurch gekennzeichnet, dass**
für den Vergleich der Folgen von Sollwerten und Istwerten aus diesen Folgen jeweils Kenngrößen bestimmt werden, wobei anhand eines Grades der Übereinstimmung der Kenngrößen über die Selektion oder Nicht-Selektion eines der den Folgen von Sollwerten entsprechenden RFID-Datenträgers (TR1, TR2, TR3) entschieden wird.

13. Verfahren nach Patentanspruch 12,
**dadurch gekennzeichnet, dass**
zur Bestimmung der Kenngrößen eine Fourier-Transformation oder ein anderes Verfahren zur Auswertung eines analogen oder digitalen Signalverlaufs verwendet wird.

14. RFID-Schreib-Lesegerät zur Selektierung eines aus einer Anzahl erfasster RFID-Datenträger (TR1, TR2, TR3),
wobei das RFID-Schreib-Lesegerät derart ausgestaltet ist, dass während einer Trainingsphase ein Sollwert für einen Empfangsparameter eines zu selektierenden Muster-RFID-Datenträgers ermittelt wird,
und wobei während eines Produktivbetriebs Ist-Werte von Empfangsparametern erfasster RFID-Datenträger (TR1, TR2, TR3) mit dem Sollwert zur Selektion eines der erfassten RFID-Datenträger (TR1, TR2, TR3) in Bezug gesetzt werden,
**dadurch gekennzeichnet, dass**
während der Trainingsphase in einer ersten zeitlichen Folge eine Anzahl Erfassungen zumindest eines Muster-RFID-Datenträgers (TR1) erfolgt, wobei zumindest eine Folge von Sollwerten für zumindest einen Empfangsparameter, nach Art einer zeitlichen Verlaufskurve ermittelt wird,
dass während des Produktivbetriebs in einer zweiten zeitlichen Folge eine Anzahl Erfassungen der im Empfangsbereich des RFID-Schreib-Lesegerätes befindlichen RFID-Datenträger (TR1, TR2, TR3) erfolgt, wobei für jeden der dabei erfassten RFID-Datenträger (TR1, TR2, TR3) jeweils eine Folge von Istwerten nach Art einer zeitlichen Verlaufskurve ermittelt wird, und dass die im Produktivbetrieb ermittelten Folgen von Istwerten mit der zumindest einen Folge von Sollwerten jeweils verglichen werden, wobei anhand des jeweiligen Grades der Übereinstimmung einer der im Produktivbetrieb erfassten RFID-Datenträger (TR1, TR2, TR3) selektiert wird.

## Claims

1. Method for selecting one from a number of RFID data carriers (TR1, TR2, TR3) detected by an RFID writer-reader, wherein during a training phase a setpoint value for a reception parameter of a specimen RFID data carrier (TR1, TR2, TR3) to be selected is determined,
and wherein during productive operation actual values of reception parameters of detected RFID data carriers (TR1, TR2, TR3) are related to the setpoint value for the selection of one of the detected RFID data carriers (TR1, TR2, TR3), **characterized in that**
during the training phase in a first temporal sequence a number of detections of at least one specimen RFID data carrier (TR1) are carried out, wherein at least one sequence of setpoint values for at least one reception parameter is determined in the manner of a temporal profile curve,
**in that** during productive operation in a second temporal sequence a number of detections of the RFID data carriers (TR1, TR2, TR3) situated in the reception region of the RFID writer-reader are carried out, wherein for each of the RFID data carriers (TR1, TR2, TR3) detected here in each case a sequence of actual values is determined in the manner of a temporal profile curve, and
**in that** the sequences of actual values determined in productive operation are compared in each case with the at least one sequence of setpoint values, wherein one of the RFID data carriers (TR1, TR2, TR3) detected in productive operation is selected on the basis of the respective degree of correspondence.

2. Method according to Patent Claim 1,
**characterized in that**
a field strength value, a signal-to-noise ratio or some other qualitative criterion of the radio-frequency signal of the respective RFID data carrier (TR1, TR2, TR3), said signal being detected in each case by the RFID writer-reader, is used as reception parameter.

3. Method according to either of the preceding patent claims,
**characterized in that**
the phase angle between transmitted signal and received signal of the radio-frequency signal of the respective RFID data carrier (TR1, TR2, TR3), said signal being detected in each case by the RFID writer-reader, is used as reception parameter.

4. Method according to any of the preceding patent claims,
**characterized in that**
the transmission power of the RFID writer-reader is varied in each case as a variation during the temporal sequence.

5. Method according to any of the preceding patent claims,
**characterized in that**
the distance between the respective RFID data carrier (TR1, TR2, TR3) and the RFID writer-reader is varied in each case as a variation during the temporal sequence.

6. Method according to any of the preceding patent claims,
**characterized in that**
the switching between a plurality of antennas and/or antenna polarizations of the RFID writer-reader is carried out as a variation during the temporal sequence.

7. Method according to any of the preceding patent claims,
**characterized in that**
the changing between a plurality of radio channels of the RFID writer-reader is carried out as a variation during the temporal sequence.

8. Method according to any of Patent Claims 4 - 7,
**characterized in that**
the variation during the temporal sequence is carried out in an analogous manner in each case during the training phase and during productive operation.

9. Method according to any of the preceding patent claims,
**characterized in that**
during the training phase a plurality of sequences of setpoint values are detected, wherein at least one of said sequences is selected as sequence of setpoint values to be used manually by a user or automatically on the basis of information obtained from the content of a data memory of the respective RFID data carrier (TR1, TR2, TR3).

10. Method according to Patent Claim 9,
**characterized in that**
the plurality of sequences of setpoint values result from the detection of different RFID data carriers (TR1, TR2, TR3).

11. Method according to any of the preceding patent claims,
**characterized in that**
upon the quasi-simultaneous reception of a plurality of RFID data carriers (TR1, TR2, TR3), the latter are distinguished from one another in each case on the basis of a respectively unique identifier or identification number, wherein said identifier or an alias for said identifier is assigned in each case to the different sequences of setpoint values and/or actual values.

12. Method according to any of the preceding patent claims,
**characterized in that**
for the comparison of the sequences of setpoint values and actual values, characteristic variables are ascertained in each case from said sequences, wherein a decision about the selection or non-selection of one of the RFID data carriers (TR1, TR2, TR3) corresponding to the sequences of setpoint values is made on the basis of a degree of correspondence of the characteristic variables.

13. Method according to Patent Claim 12,
**characterized in that**
a Fourier transformation or some other method for evaluating an analog or digital signal profile is used for ascertaining the characteristic variables.

14. RFID writer-reader for selecting one from a number of detected RFID data carriers (TR1, TR2, TR3),
wherein the RFID writer-reader is configured in such a way that during a training phase a setpoint value for a reception parameter of a specimen RFID data carrier to be selected is determined,
and wherein during productive operation actual values of reception parameters of detected RFID data carriers (TR1, TR2, TR3) are related to the setpoint value for the selection of one of the detected RFID data carriers (TR1, TR2, TR3), **characterized in that**
during the training phase in a first temporal sequence a number of detections of at least one specimen RFID data carrier (TR1) are carried out, wherein at least one sequence of setpoint values for at least one reception parameter is determined in the manner of a temporal profile curve,
**in that** during productive operation in a second temporal sequence a number of detections of the RFID data carriers (TR1, TR2, TR3) situated in the reception region of the RFID writer-reader are carried out, wherein for each of the RFID data carriers (TR1, TR2, TR3) detected here in each case a sequence of actual values is determined in the manner of a temporal profile curve, and **in that** the sequences of actual values determined in productive operation are compared in each case with the at least one sequence of setpoint values, wherein one of the RFID data carriers (TR1, TR2, TR3) detected in productive operation is selected on the basis of the respective degree of correspondence.

## Revendications

1. Procédé de sélection d'un support ( TR1, TR2, TR3 ) de données RFID détecté par un appareil d'écriture-lecture parmi un certain nombre d'entre eux,
dans lequel, pendant une phase d'apprentissage, on détermine une valeur de consigne d'un paramètre de réception d'un support ( TR1, TR2, TR3 ) de données RFID modèle à sélectionner,
et dans lequel, pendant un fonctionnement productif, on met, pour la sélection d'un des supports ( TR1, TR2, TR3 ) de données RFID détectés, des valeurs réelles de paramètres de réception de support ( TR1, TR2, TR3 ) de données RFID détectés en relation avec la valeur de consigne,
**caractérisé en ce que**
pendant la phase d'apprentissage, il s'effectue, dans une première séquence temporelle, un certain nombre de détections d'au moins un support ( TR1 ) de données RFID modèle, au moins une suite de valeurs de consigne d'au moins un paramètre de réception étant déterminée à la manière d'une courbe de variation en fonction du temps,
**en ce que**, pendant le fonctionnement productif dans une autre séquence temporelle, il s'effectue un certain nombre de détections des supports de données RFID se trouvant dans la zone de réception de l'appareil ( TR1, TR2, TR3 ) d'écriture-lecture RFID, dans lequel, pour chacun des supports ( TR1, TR2, TR3 ) de données RFID détectés, on détermine respectivement une suite de valeurs réelles à la manière d'une courbe de variation en fonction du temps et
**en ce qu'**on compare la suite de valeurs réelles déterminée dans le fonctionnement productif à la au moins une suite de valeurs de consigne, dans lequel, au moyen du degré respectif de coïncidence, on sélectionne l'un des supports ( TR1, TR2, TR3 ) de données RFID détectés dans le fonctionnement productif.

2. Procédé suivant la revendication 1,
**caractérisé en ce que**
on utilise, comme paramètre de réception, une valeur d'intensité du champ, une distance de tension de bruit ou un autre critère qualitatif du signal de haute fréquence détecté par l'appareil d'écriture-lecture RFID du support ( TR1, TR2, TR3 ) de données RFID respectif.

3. Procédé suivant l'une des revendications précédentes,
**caractérisé en ce que**
on utilise, comme paramètre de réception, l'angle de phase entre le signal envoyé et le signal reçu du signal de haute fréquence détecté par l'appareil d'écriture-lecture RFID du support ( TR1, TR2, TR3 ) de données RFID respectif.

4. Procédé suivant l'une des revendications précédentes,
**caractérisé en ce que**
on fait varier la séquence temporelle sous la forme d'une variation de la puissance d'émission de l'appareil d'écriture-lecture RFID.

5. Procédé suivant l'une des revendications précédentes,
**caractérisé en ce que**
pendant la séquence temporelle, on fait varier comme variation respectivement la distance entre le support ( TR1, TR2, TR3 ) de données RFID respectif et l'appareil d'écriture-lecture RFID.

6. Procédé suivant l'une des revendications précédentes,
**caractérisé en ce que**
pendant la séquence temporelle, on commute comme variation entre plusieurs antennes et/ou polarisations d'antenne de l'appareil d'écriture-lecture RFID.

7. Procédé suivant l'une des revendications précédentes,
**caractérisé en ce que**
pendant la séquence temporelle, on change comme variation entre plusieurs canaux radio de l'appareil d'écriture-lecture RFID.

8. Procédé suivant l'une des revendications 4 à 7,
**caractérisé en ce que**
pendant la phase d'apprentissage et pendant le fonctionnement productif, on effectue la variation pendant la séquence temporelle respectivement de manière analogique.

9. Procédé suivant l'une des revendications précédentes,
**caractérisé en ce que**
pendant la phase d'apprentissage, on détecte plusieurs suites de valeurs de consigne, au moins l'une de ces suites étant choisie comme suite de valeurs de consigne à utiliser manuellement par un utilisateur ou automatiquement à l'aide d'informations qui ont été obtenues à partir du contenu d'une mémoire de données du support ( TR1, TR2, TR3 ) de données RFID respectif.

10. Procédé suivant la revendication 9,
**caractérisé en ce que**
les plusieurs suites de valeurs de consigne proviennent de la détection de divers supports ( TR1, TR2, TR3 ) de données RFID.

11. Procédé suivant l'une des revendications précédentes,
**caractérisé en ce que**
lors de la réception quasiment simultanée de plusieurs supports ( TR1, TR2, TR3 ) de données RFID, ceux-ci sont différenciés les uns des autres, respectivement à l'aide d'une caractérisation univoque ou d'un numéro d'identification, cette caractérisation ou un alias de cette caractérisation étant affecté aux diverses suites de valeurs de consigne et/ou aux valeurs réelles.

12. Procédé suivant l'une des revendications précédentes,
**caractérisé en ce que**
pour comparer les suites de valeurs de consigne et de valeurs réelles, on détermine, à partir de ces suites, respectivement des grandeurs caractéristiques en décidant, à l'aide d'un degré de coïncidence des grandeurs caractéristiques, de la sélection ou de la non-sélection de l'un des supports ( TR1, TR2, TR3 ) de données RFID correspondant aux suites de valeurs de consignes.

13. Procédé suivant la revendication 12,
**caractérisé en ce que**
pour la détermination des grandeurs caractéristiques, on utilise une transformation de Fourier ou un autre procédé d'exploitation d'une courbe de signal analogique ou numérique.

14. Appareil d'écriture-lecture RFID pour sélectionner un support ( TR1, TR2, TR3 ) de données RFID détecté parmi un certain nombre d'entre eux, l'appareil d'écriture-lecture RFID étant conformé de manière à déterminer, pendant une phase d'apprentissage, une valeur de consigne d'un paramètre de réception d'un support de données RFID modèle à sélectionner, et dans lequel, pendant un fonctionnement productif, on met, pour sélectionner l'un des supports ( TR1, TR2, TR3 ) de données RFID détectés, des valeurs réelles de paramètres de réception de supports ( TR1, TR2, TR3 ) de données RFID en relation avec la valeur de consigne,
**caractérisé en ce que**
pendant la phase d'apprentissage, il s'effectue, dans une première séquence temporelle, un certain nombre de détections d'au moins un support ( TR1 ) de support de données modèle, au moins une suite de valeurs de consigne d'au moins un paramètre de réception étant déterminée à la manière d'une courbe de variation en fonction du temps,
**en ce que**, pendant le fonctionnement productif dans une autre séquence temporelle, il s'effectue un certain nombre de détections des supports de données RFID se trouvant dans la zone de réception de l'appareil ( TR1, TR2, TR3 ) d'écriture-lecture RFID, dans lequel, pour chacun des supports ( TR1, TR2, TR3 ) de données RFID détectés, on détermine respectivement une suite de valeurs réelles à la manière d'une courbe de variation en fonction du temps et **en ce qu'**on compare la suite de valeurs réelles déterminée dans le fonctionnement productif à la au moins une suite de valeurs de consigne, dans lequel, au moyen du degré respectif de coïncidence, on sélectionne l'un des supports ( TR1, TR2, TR3 ) de données RFID détectés dans le fonctionnement productif.
